# FASCICULE DE BREVET EUROPEEN

(11) **EP 2 307 737 B1**
(45) Date de publication et mention de la délivrance du brevet: **01.08.2018**
(21) Numéro de dépôt: 09772391.0
(22) Date de dépôt: 29.06.2009
(51) Int. Cl.: F01D 9/06, F01D 11/24, F02C 6/08, F02C 7/18, F04D 29/16, F04D 29/58

(54) **COMPRESSEUR AXIALO-CENTRIFUGE A SYSTEME DE PILOTAGE DE JEUX**
AXIALKREISELVERDICHTER MIT SYSTEM ZUR SPIELSTEUERUNG
AXIAL-CENTRIFUGAL COMPRESSOR HAVING SYSTEM FOR CONTROLLING PLAY

(30) Priorité: 01.07.2008 FR 0854456
(43) Date de publication de la demande: 13.04.2011
(73) Titulaire: Safran Aircraft Engines, 75015 Paris (FR)
(72) Inventeur: BEHAGHEL, Laurent, Donatien, F-91230 Montgeron (FR); FONTANEL, Eddy, Stéphane, Joël, F-75014 Paris (FR); PEGOUET, Benjamin, Philippe, Pierre, F-95000 Cergy (FR)
(74) Mandataire: Ilgart, Jean-Christophe
(86) Numéro de dépôt international: PCT/EP2009/058101
(87) Numéro de publication internationale: WO 2010/000691

(56) Documents cités:
- EP-A- 0 578 285
- DE-A1- 2 165 528
- FR-A- 2 722 836
- US-A- 4 264 271
- US-A- 4 687 412

## Description

Le sujet de cette invention est un compresseur axialo-centrifuge à système de pilotage de jeux.

Un compresseur axialo-centrifuge comprend une première portion classique, où le rotor et le stator sont cylindriques et concentriques autour de la ligne d'axe du compresseur, puis une partie où ils s'épanouissent en direction radiale de sorte que la partie correspondante du rotor, appelée rouet, s'étend au-delà du stator le long de la ligne d'axe. Un de ses avantages est de réduire l'encombrement de la machine en direction de l'axe et produire des machines plus compactes et plus légères.

Le rendement des compresseurs et des machines auxquels ils peuvent être intégrés dépend beaucoup des jeux existant entre le rotor et le stator et qui sont responsables de pertes d'énergie dans l'écoulement des gaz. Il est classique de régler ces jeux par une ventilation d'un gaz à la température et au débit voulus pour produire une dilatation thermique différentielle entre le rotor et le stator en direction radiale. On utilise généralement de l'air prélevé d'une section du compresseur pour profiter de sa mise sous pression et le faire circuler dans des conduites ou des cavités, vers le lieu où la dilatation thermique différentielle doit être commandée. Une vanne permet de régler le débit du gaz de ventilation et la quantité de chaleur qu'il apporte, au contraire soutire, d'après la correction du jeu demandé à chaque régime de la machine.

Le système de réglage de jeu radial est toutefois appliqué aux stators dans les dispositifs classiques. De plus, ces dispositifs ont été appliqués seulement à des compresseurs axiaux.

Il existe encore des dispositifs de ventilation du rotor, dans lesquels un autre débit d'air originaire du stator traverse un bras radial de support du rotor avant de pénétrer dans une cavité centrale de celui-ci. Ces dispositifs de ventilation ont pour seul but d'empêcher un échauffement excessif du rotor. En particulier, ils ne sont pas pilotés en débit, ce qui ne leur permet pas d'exercer de réglage de jeu.

On doit toutefois mentionner le brevet français 2 698 667, où un réglage de jeu axial d'un rouet de compresseur axialo-centrifuge est réalisé par un équilibre de forces de pression ; les brevets US-A-4 687 412 et DE-A-21 69 528 où le jeu axial est réglé par des moyens mécaniques et statiques (cales ou rondelles dans des assemblages boulonnés) ; et le brevet FR-A-2 722 836 où il est réglé par le déplacement axial, commandé par un vérin, asservi, du palier de butée du rotor.

L'objet de l'invention est de réaliser un pilotage du jeu axial de la partie épanouie d'un compresseur axialo-centrifuge et de son jeu essentiellement axial par des dilatations thermiques différentielles, ce qui ne semble pas avoir été proposé auparavant. L'utilisation des dispositifs de ventilation classiques ne donnerait pas de bons résultats puisque le jeu axial serait piloté en même temps que le jeu radial de la première partie du compresseur, ce qui serait incompatible pour obtenir des résultats satisfaisants.

Le compresseur conforme à l'invention est caractérisé en ce qu'il comprend un rotor et un stator séparés par une veine d'écoulement et présentant chacun une portion cylindrique puis une portion épanouie, les portions cylindriques étant concentriques à une ligne d'axe et distantes d'un jeu radial, les portions épanouies étant alignées le long de la ligne d'axe et distantes d'un jeu axial, caractérisé en ce qu'il comprend un trajet de ventilation exerçant un réglage du jeu axial, s'étendant depuis le stator jusqu'au rotor et comprenant une première branche équipée d'une première vanne de réglage d'ouverture, et une seconde branche équipée d'un échangeur de chaleur et d'une seconde vanne de réglage d'ouverture.

Ce dispositif permet d'effectuer un réglage suffisant du jeu axial sans encourir d'incompatibilité de réglage entre le jeu axial et le jeu radial, pour des raisons qu'on détaillera plus loin.

Les deux branches ayant un débit réglable et la seconde branche conférant un changement de température du gaz soutiré pour la ventilation, le débit et la température de ce gaz sont tous deux réglables, ce qui est nécessaire pour instaurer un réglage suffisant du jeu joint à une ventilation suffisante.

Selon divers perfectionnements de l'invention, les branches du trajet ont une origine commune, dans une cavité du stator adjacente à la veine, et sont alimentées par le même gaz : la seconde branche est en réalité une dérivation de la première. Le dispositif, comprenant une seule source où le gaz est prélevé, est simplifié, ce qui est d'autant plus appréciable que les compresseurs axialo-centrifuges sont petits.

L'échangeur de chaleur exerce avantageusement un rafraîchissement de la seconde branche de manière que le dispositif exerce des contractions du rotor. Le fonctionnement typique correspond alors à un jeu plus important au démarrage et à l'accélération, où le dispositif de réglage est inactif, qu'en régime de croisière où il est appliqué. Il est en effet avantageux d'utiliser le dispositif en régime de croisième qui est le plus fréquent et où le carburant est donc principalement dépensé, de sorte que c'est là que les économies les plus importantes peuvent être obtenues. Un jeu plus important est accepté aux régimes d'accélération et de démarrage qui sont plus brefs, alors qu'une disparition totale des jeux pourrait endommager le compresseur. De plus, les régimes de croisière sont stables et bien définis de sorte que les jeux sont connus avec plus de précision que pendant des régimes instables.

L'échangeur de chaleur peut être constitué d'une section de la seconde branche passant à travers une cavité extérieure du stator, ce qui la met en contact avec de l'air plus frais et réalise l'échangeur de chaleur de façon particulièrement simple.

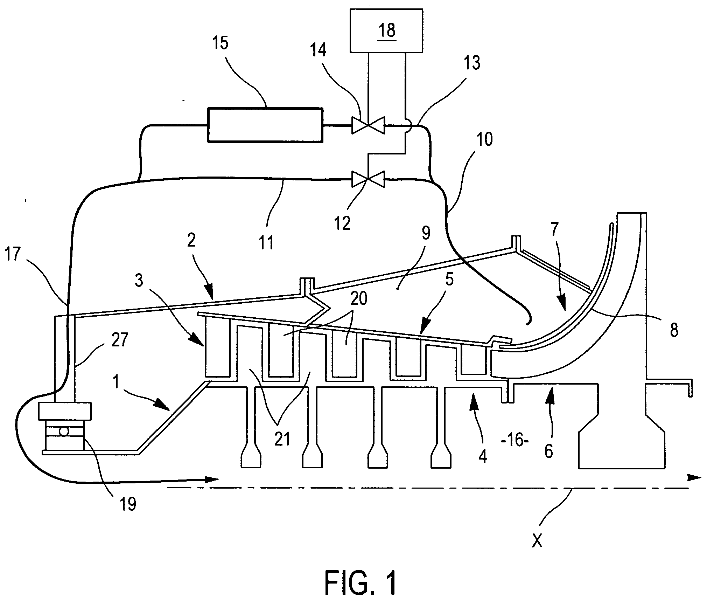

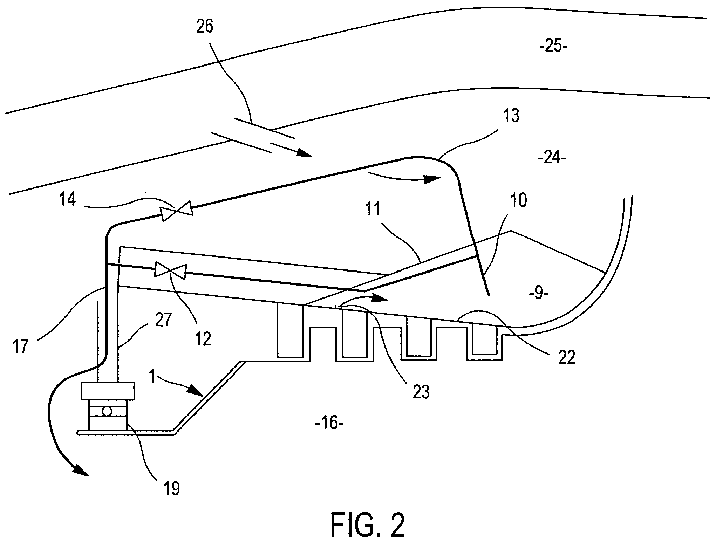

Une réalisation préférée mais non limitative de l'invention sera maintenant décrite en liaison aux figures suivantes : la figure 1 est une vue générale du compresseur et du dispositif de pilotage de jeu, et la figure 2 une vue plus détaillée du dispositif de pilotage.

Le compresseur axialo-centrifuge comprend un rotor 1 et un stator 2 séparés par une veine 3 d'écoulement des gaz. Le rotor 1 et le stator 2 présentent chacun une portion axiale, respectivement 4 ou 5, sensiblement cylindrique, puis une portion épanouie, respectivement 6 ou 7 épanouie. La portion 6 du rotor 1 est le rouet. C'est le jeu axial 8 entre ces portions épanouies 6 et 7 qu'il convient de régler. Sa valeur est typiquement de quelques dixièmes de millimètre au repos (0,7 ou 0,8 mm par exemple).

Le stator 2 comporte des cavités 9 autour de la veine 3. Une conduite 10 débouche dans l'une d'elles et soutire un débit de son contenu gazeux. Elle se divise ensuite en une première branche 11 équipée d'une première vanne 12 et en une seconde branche 13 équipée d'une seconde vanne 14 et d'un échangeur de chaleur 15. Les branches 11 et 13 se rejoignent ensuite, et leurs écoulements aboutissent à une cavité 16 du rotor 1 par une conduite commune 17. Cela n'est toutefois par nécessaire, les écoulements pouvant rester séparés jusqu'à la cavité 16. Un système de pilotage 18 seulement esquissé commande les ouvertures des vannes 12 et 14 d'après le régime de la machine, connu par des capteurs de pression, de température, de vitesse de rotation, etc. qui mesurent ces paramètres en divers points. Il est ainsi possible d'influencer le débit de gaz fourni à la cavité 16, et sa température en faisant varier la proportion de ce gaz passant par l'échangeur de chaleur 15. La conséquence en est une modification du jeu axial 8, qui peut être réduit de plusieurs dixièmes de millimètre (0,3 ou 0,4 mm par exemple ce qui donne un jeu résultant inférieur à 0,5 mm par soustraction des valeurs précédentes, et qui est parfaitement admisible). L'ajustement des deux débits des branches 11 et 13 est indiqué, afin de faire varier de l'ampleur suffisante la quantité de chaleur extraite de celui-ci. La première branche 11 est utilisée avant tout pour assurer une ventilation à tous les régimes de la machine où un rafraîchissement important (par la seconde branche 13) n'est pas fait. Elle permet d'ailleurs de fournir du gaz de chauffage au rotor 1, afin d'augmenter le jeu axial 8 aux phases de démarrage et d'assurer un fonctionnement sûr. Le pilotage est mené par le système de pilotage 18 d'après des essais et des mesures précédent le service effectif du compresseur, et qui ont permis de déterminer les jeux réels et les valeurs dont ils peuvent être réduits. Le système de pilotage 18 est de préférence actif en régime de croisière, où les caractéristiques de fonctionnement sont stables et bien connues, et les jeux aussi, de sorte qu'ils peuvent être réduits à une faible valeur sans danger de les supprimer complétement et d'user la machine par des frottements, ou même de l'endommager alors plus gravement, par des feux de titane par exemple.

Il convient de donner quelques explications pour montrer la pertinence du dispositif. Le rotor 1 est soutenu par le stator 2 au moyen d'un palier 19 à l'opposé du rouet 6, et, malgré sa conception axialo-centrifuge, le rotor 1 est beaucoup plus étendu dans la ligne d'axe X que dans la direction radiale. Les déplacements consécutifs aux dilatations thermiques apportées par le gaz de ventilation sont donc d'autant plus importants aux endroits éloignés du palier 19, c'est-à-dire précisément au rouet 6. Les déplacements axiaux de la portion axiale 4 du rotor 1 sont plus réduits, et sont de toute façon acceptables puisqu'ils modifient seulement de manière marginale la distance entre les étages d'aubes fixe 20 et mobile 21 ; et les dilatations du rotor 1 en direction radiale sont beaucoup moins importantes qu'en direction axiale, de l'ordre de quelques centièmes de millimètre (0,02 ou 0,03 mm) au point qu'elles peuvent éventuellement être négligées. Un système classique de pilotage du jeu radial entre les portions axiales 4 et 5 du rotor 1 et du stator 2 peut être établi dans le stator 2, et réglé indépendamment du dispositif de l'invention.

Ainsi qu'on l'a mentionné, les branches 11 et 13 peuvent être séparées à l'origine et déboucher dans différentes cavités, mais l'utilisation d'une source unique de gaz de ventilation est appréciée. La cavité 9 où le gaz de ventilation est prélevé peut être une des cavités entourant directement la peau interne 22 (donnant sur la veine 3) du stator 2, et qu'un piquage 23 alimente en air comprimé originaire d'une section déterminée du compresseur. La seconde branche 13 peut s'étendre dans une cavité extérieure 24, qui s'étend entre la cavité 9 et une veine secondaire 25 formant la portion extérieure du stator 2. La cavité extérieure 24 étant plus fraîche, l'air passant par la seconde branche 13 se rafraîchit sans autre action et l'échangeur de chaleur 15 est donc constitué par cette partie de la seconde branche 13 passant par la cavité extérieure 24. Pour un rafraîchissement plus marqué, il serait possible de faire passer la seconde branche 13 aussi par la veine secondaire 25. A défaut, un rafraîchissement important est obtenu en le faisant passer près d'une des écopes 26 qui alimentent la cavité extérieure 24 à partir de la veine secondaire 25. Plus en aval, la conduite commune 17 peut passer par un des bras radiaux 27 soutenant le rotor 1 et y entrer par une extrémité ouverte de celui-ci.

## Revendications

1. Compresseur axialo-centrifuge comprenant un rotor (1) et un stator (2) séparés par une veine (3) d'écoulement et présentant chacun une portion axiale (4, 5) puis une portion épanouie (6, 7), les portions axiales étant concentriques à une ligne d'axe (X) et distantes d'un jeu radial, les portions épanouies étant alignées le long de la ligne d'axe (X) et distantes d'un jeu axial (8), **caractérisé en ce qu'**il comprend un circuit de ventilation exerçant un réglage du jeu axial, s'étendant depuis le stator jusqu'au rotor et comprenant une première branche (11) équipée d'une première vanne (12) de réglage d'ouverture, et une seconde branche (13) équipée d'un échangeur de chaleur (15) et d'une seconde vanne (14) de réglage d'ouverture.

2. Compresseur axialo-centrifuge selon la revendication 1, **caractérisé en ce que** les branches ont une origine commune, dans une cavité (9) du stator adjacente à la veine (3).

3. Compresseur axialo-centrifuge selon l'une quelconque des revendications 1 ou 2, **caractérisé en ce que** la seconde branche (13) est plus fraîche en aval de l'échangeur de chaleur (15) que la première branche.

4. Compresseur axialo-centrifuge selon la revendication 3, **caractérisé en ce que** l'échangeur de chaleur est constitué d'une section de la seconde branche passant à travers une cavité extérieure (24) du stator.

5. Compresseur axialo-centrifuge selon l'une quelconque des revendications précédentes, **caractérisé en ce que** la seconde vanne est pourvue d'un moyen de pilotage (18) qui l'ouvre à un régime stable de croisière du compresseur.

## Patentansprüche

1. Axialkreiselverdichter mit einem Rotor (1) und einem Stator (2), die durch eine Strömungsbahn (3) voneinander getrennt sind und jeweils einen axialen Abschnitt (4, 5) und anschließend einen ausgebauchten Abschnitt (6, 7) aufweisen, wobei die axialen Abschnitte konzentrisch zu einer Achslinie (X) und um ein radiales Spiel entfernt sind, wobei die ausgebauchten Abschnitte entlang der Achslinie (X) fluchten und um ein radiales Spiel (8) entfernt sind,
**dadurch gekennzeichnet,**
**dass** er einen Belüftungskreis aufweist, der eine Regelung des axialen Spiels bewirkt, sich von dem Stator bis zum Rotor erstreckt und einen ersten Zweig (11) umfasst, der mit einem ersten Ventil (12) zum Regeln einer Öffnung ausgestattet ist, und einen zweiten Zweig (13) umfasst, der mit einem Wärmetauscher (15) und einem zweiten Ventil (14) zum Regeln einer Öffnung ausgestattet ist.

2. Axialkreiselverdichter nach Anspruch 1,
**dadurch gekennzeichnet,**
**dass** die Zweige einen gemeinsamen Ausgangspunkt in einem an die Strömungsbahn (3) angrenzenden Hohlraum (9) des Stators haben.

3. Axialkreiselverdichter nach einem der Ansprüche 1 oder 2,
**dadurch gekennzeichnet,**
**dass** der zweite Zweig (13) stromabwärts vom Wärmetauscher (15) kühler ist als der erste Zweig.

4. Axialkreiselverdichter nach Anspruch 3,
**dadurch gekennzeichnet,**
**dass** der Wärmetauscher von einem Teilabschnitt des zweiten Zweigs gebildet wird, der durch einen äußeren Hohlraum (24) des Stators hindurch verläuft.

5. Axialkreiselverdichter nach einem der vorherigen Ansprüche,
**dadurch gekennzeichnet,**
**dass** das zweite Ventil mit einem Steuermittel (18) versehen ist, das es bei gleichmäßigem Flugbetrieb des Verdichters öffnet.

## Claims

1. An axial-centrifugal compressor comprising a rotor (1) and a stator (2) separated by a flow vein (3) and each having an axial portion (4, 5) and then a spread-out portion (6, 7), the axial portions being concentric with an axis line (X) and distant by a radial play, the spread-out portions being aligned along the axis line (X) and distant by an axial play (8), **characterized in that** it comprises a ventilation circuit exerting adjustment of the axial play, extending from the stator up to the rotor and comprising a first arm (11) equipped with a first valve (12) for adjusting the opening, and a second arm (13) equipped with a heat exchanger (15) and with a second valve (14) for adjusting the opening.

2. The axial-centrifugal compressor according to claim 1, **characterized in that** the arms have a common origin, in a cavity (9) of the stator adjacent to the vein (3).

3. The axial-centrifugal compressor according to any of claims 1 or 2, **characterized in that** the second arm (13) is fresher downstream from the heat exchanger (15) than the first arm.

4. The axial-centrifugal compressor according to claim 3, **characterized in that** the heat exchanger consists of a section of the second arm passing through an outer cavity (24) of the stator.

5. The axial-centrifugal compressor according to any of the preceding claims, **characterized in that** the second valve is provided with a controlling means (18) which opens it at a stable cruising speed of the compressor.
